# FASCICULE DE BREVET EUROPEEN

(11) **EP 3 156 758 B1**
(45) Date de publication et mention de la délivrance du brevet: **28.03.2018**
(21) Numéro de dépôt: 16188932.4
(22) Date de dépôt: 15.09.2016
(51) Int. Cl.: G01B 3/08, G01B 3/20, G01B 5/18

(54) **PROCEDE DE CONTROLE D'UN DESAXAGE ENTRE DEUX BUTEES ET OUTIL DE CONTROLE D'UN DESAXAGE ENTRE DEUX BUTEES**
VERFAHREN ZUR STEUERUNG EINES VERSATZES ZWISCHEN ZWEI ANSCHLÄGEN, UND WERKZEUG ZUR STEUERUNG EINES VERSATZES ZWISCHEN ZWEI ANSCHLÄGEN
METHOD FOR CONTROLLING AN OFFSET BETWEEN TWO ABUTMENTS AND TOOL FOR CONTROLLING AN OFFSET BETWEEN TWO ABUTMENTS

(30) Priorité: 13.10.2015 FR 1559696
(43) Date de publication de la demande: 19.04.2017
(73) Titulaire: AIRBUS OPERATIONS (S.A.S), 31060 Toulouse (FR)
(72) Inventeur: MORILLE, Dominique, 44550 MONTOIR DE BRETAGNE (FR); MASSONNET, Maxime, 92120 MONTROUGE (FR)
(74) Mandataire: Gicquel, Olivier Yves Gérard

(56) Documents cités:
- US-A- 4 285 132
- US-A- 5 235 988
- US-A- 5 465 498

## Description

La présente invention se rapporte à un procédé de contrôle d'un désaxage entre deux butées ainsi qu'à un outil de contrôle d'un désaxage entre deux butées.

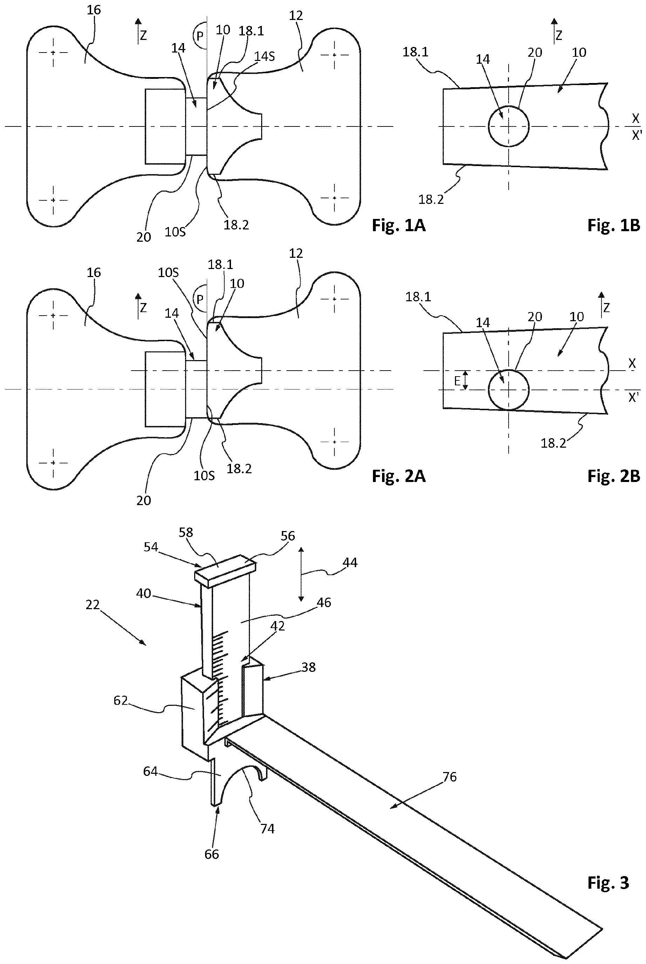

Sur les figures 1A, 1B, 2A et 2B, on a représenté une première butée 10 solidaire d'un premier support 12 relié à un encadrement et une deuxième butée 14 solidaire d'un deuxième support 16 relié à une porte articulée par rapport à l'encadrement.

La première butée 10 et la deuxième butée 14 ont respectivement une première surface de contact 10S et une deuxième surface de contact 14S, ces surfaces de contact 10S et 14S étant configurées pour être en contact l'une contre l'autre lorsque la porte est en position fermée.

Les première et deuxième surfaces de contact 10S et 14S sont sensiblement planes et leur plan de contact est appelé plan de référence P par la suite. La première surface de contact 10S a une forme allongée délimitée par un premier chant 18.1 et un deuxième chant 18.2. Les premier et deuxième chants 18.1 et 18.2 sont symétriques par rapport à un premier axe médian X.

Pour la suite de la description, une direction de désaxage Z correspond à une direction perpendiculaire au premier axe médian X et contenue dans le plan de référence P. La deuxième butée 14 est une pastille cylindrique qui comprend un pourtour cylindrique 20. La deuxième surface de contact 14S a une forme de disque et comprend un deuxième axe médian X' parallèle au premier axe médian X.

De manière optimale, la deuxième surface de contact 14S doit être positionnée de manière centrée par rapport à la première surface 10S, comme illustré sur les figures 1A et 1B. Ainsi, les premier et deuxième axes médians X et X' sont confondus.

Toutefois, comme illustré sur les figures 2A et 2B, les première et deuxième surfaces de contact 10S et 14S sont généralement désaxées selon la direction de désaxage Z, les premier et deuxième axes médians X et X' étant écartés d'une distance E appelée désaxage.

Ce désaxage E doit être inférieur ou égal à +/- 1 mm dans le cas d'une butée de porte d'aéronef.

Le contrôle de ce désaxage E n'est pas aisé car l'espace autour des première et deuxième butées 10 et 12 est exigu, la porte étant en position fermée lors du contrôle.

Le document US5235988 décrit un dispositif pour mesurer les dimension des reliefs d'une surface. Le dispositif tel que décrit comprends une pluralité de jambes qui viennent en appui sur la surface et un réglet coulissant dont l'extrémité est plane. Le dispositif comprend également un indicateur permettant d'évaluer la distance parcouru par le réglet coulissant jusqu'au relief à mesurer. Cet outil requiert une zone dégagée autour de la surface sur laquelle il est appuyé.

Le document US4825132 décrit un dispositif pour mesurer l'écart de coaxialité entre une tige de piston et le corps du piston. Ce dispositif comprend deux support venant en appui contre le corps et un capteur angulaire devant être positionné au contact de la tige pour fournir une valeur. La lecture de cette valeur n'est plus possible dès que la sonde n'est plus au contact de la tige de piston.

Le document US5465498 décrit une jauge de mesure d'un décalage entre deux éléments tubulaires. Ce dispositif comprend deux réglets coulissants dont l'extrémité est plane venant se positionner chacun sur un des membres tubulaires. Une fenêtre permet de visualiser l'écart entre les deux réglets. Cette jauge n'est pas adaptée à des zones aussi étroites que celle existant entre une porte et un encadrement de porte.

La présente invention vise à remédier aux inconvénients de l'art antérieur.

A cet effet, l'invention a pour objet un outil de contrôle d'un désaxage entre deux butées, l'outil comprenant un corps, une pige coulissante et un système de contrôle d'un déplacement de la pige coulissante par rapport au corps, la pige coulissante comprenant une extrémité configurée pour prendre appui contre une première butée parmi les deux butées, le corps comprenant un guidage configuré pour permettre à la pige coulissante de coulisser selon une direction longitudinale et un prolongement qui comporte une extrémité configurée pour prendre appui contre une deuxième butée parmi les deux butées, le guidage et le prolongement étant décalés l'un de l'autre selon une direction transversale perpendiculaire à la direction longitudinale. L'extrémité du prolongement comprend une encoche en forme d'arc de cercle avec un diamètre égal au diamètre de la deuxième butée en forme de pastille cylindrique. Cet outil permet de contrôler de manière simple et efficace si le désaxage est inférieur ou égal à une valeur de tolérance.

De préférence, l'extrémité de la pige coulissante a une forme pointue.

Selon une autre caractéristique, le système de contrôle est configuré pour mesurer le déplacement de la pige coulissante par rapport au corps. Selon un mode de réalisation, le système de contrôle comprend des graduations sur la pige coulissante et au moins une marque sur le corps configurée pour coopérer avec les graduations de la pige coulissante.

Selon une autre caractéristique, l'outil comprend une tige de préhension reliée au corps.

L'invention a également pour objet un procédé de contrôle d'un désaxage, mis en oeuvre par l'outil de contrôle mentionné ci-dessus, entre une première butée et une deuxième butée, la première butée comprenant une première surface de contact délimitée selon une direction de désaxage par un premier chant et par un deuxième chant, la deuxième butée comprenant une deuxième surface de contact délimitée selon la direction de désaxage par un premier bord et par un deuxième bord.

Le procédé comprend les étapes de :
- détermination d'un écart entre une première distance selon la direction de désaxage, dans une première position, entre le premier chant de la première butée et le premier bord de la deuxième butée et une seconde distance selon la direction de désaxage, dans une seconde position diamétralement opposée à la première position, entre le deuxième chant de la première butée et le deuxième bord de la deuxième butée, et
- contrôle que l'écart est inférieur ou égal au double d'une valeur de tolérance.

L'invention a également pour objet un procédé de mesure d'un désaxage, mis en oeuvre par l'outil de contrôle mentionné ci-dessus, entre une première butée et une deuxième butée, la première butée comprenant une première surface de contact délimitée selon une direction de désaxage par un premier chant et par un deuxième chant, la deuxième butée comprenant une deuxième surface de contact délimitée selon la direction de désaxage par un premier bord et par un deuxième bord.

Le procédé comprend les étapes de :
- réalisation d'une première mesure selon la direction de désaxage, dans une première position, entre le premier chant de la première butée et le premier bord de la deuxième butée,
- réalisation d'une seconde mesure selon la direction de désaxage, dans une seconde position diamétralement opposée à la première position, entre le deuxième chant de la première butée et le deuxième bord de la deuxième butée,
- détermination d'une valeur de désaxage qui est égale à la moitié de la différence entre la première mesure et la seconde mesure.

D'autres caractéristiques et avantages ressortiront de la description qui va suivre de l'invention, description donnée à titre d'exemple uniquement, en regard des dessins annexés sur lesquels :
- La figure 1A est vue latérale de deux butées qui illustre le contexte de l'invention,
- La figure 1B est une vue de face des deux butées visibles sur la figure 1A,
- La figure 2A est une vue latérale de deux butées qui illustre un désaxage,
- La figure 2B est une vue de face des deux butées visibles sur la figure 2A,
- La figure 3 est un outil de mesure d'un désaxage qui illustre un mode de réalisation de l'invention,
- La figure 4 est une coupe de l'outil visible sur la figure 3,
- La figure 5 est une vue en perspective d'une pige coulissante de l'outil illustré sur la figure 3,
- La figure 6 est une vue en perspective d'un corps de l'outil illustré sur la figure 3,
- La figure 7 est une vue latérale de deux butées et d'un outil de mesure d'un désaxage lors d'une première mesure, et
- La figure 8 est une vue latérale des deux butées et de l'outil de mesure d'un désaxage visibles sur la figure 7 lors d'une seconde mesure.

Sur les figures 3, 4, 7 et 8, on a représenté en 22 un outil de contrôle d'un désaxage entre une première butée 24 et une deuxième butée 26. Les première et deuxième butées 24 et 26 sont approximativement alignées selon une direction de décalage Y.

Selon une configuration, la première butée 24 est solidaire d'un support 28 relié à un encadrement d'un aéronef et la deuxième butée 26 est solidaire d'un support 30 relié à une porte articulée par rapport à l'encadrement.

La première butée 24 et la deuxième butée 26 comprennent respectivement une première surface de contact 24S et une deuxième surface de contact 26S configurées pour être en contact l'une contre l'autre lorsque la porte est en position fermée.

Les première et deuxième surfaces de contact 24S et 26S sont sensiblement planes et leur plan de contact est appelé plan de référence P. Le plan de référence P est sensiblement perpendiculaire à la direction de décalage Y. La première surface de contact 24S a une forme allongée.

Ainsi, la première surface de contact 24S est délimitée par un premier chant 32.1 et un deuxième chant 32.2 qui sont symétriques par rapport à un premier axe médian X.

Selon cette configuration, une direction de désaxage Z est parallèle au plan P et perpendiculaire au premier axe médian X. La deuxième butée 26 est une pastille cylindrique et comprend un pourtour cylindrique 34. La deuxième surface de contact 26S a une forme de disque. Selon la direction de désaxage Z, la deuxième butée 26 est délimitée par un premier bord 36.1 et un deuxième bord 36.2. Dans le cas d'une deuxième butée 24 en forme de pastille cylindrique, les premier et deuxième bords 36.1 et 36.2 sont des arcs de cercle.

Quelle que soit la forme des première et deuxième surfaces de contact 24S et 26S des butées 24 et 26, selon une première direction de désaxage Z, la première butée 24 comprend un premier chant 32.1 et un deuxième chant 32.2 disposés de part et d'autre d'un premier axe médian X et la deuxième butée 26 comprend un premier bord 36.1 et un deuxième bord 36.2 disposés de part et d'autre d'un deuxième axe médian X'.

Les premier et deuxième bords 36.1 et 36.2 sont respectivement décalés par rapport aux premier et deuxième chants 32.1 et 32.2 selon la direction de décalage Y perpendiculaire à la direction de désaxage Z.

La distance séparant les premier et deuxième axes médians X et X' correspond au désaxage E.

Ce désaxage E doit être inférieur ou égal à une valeur de tolérance. Dans le cas d'une porte d'aéronef, la valeur de tolérance est de +/- 1 mm.

Comme illustré sur la figure 3, l'outil 22 comprend un corps 38, une pige coulissante 40, une liaison glissière 42 reliant le corps 38 et la pige coulissante 40. La liaison glissière 42 est configurée pour permettre à la pige coulissante 40 de se translater selon une direction longitudinale 44.

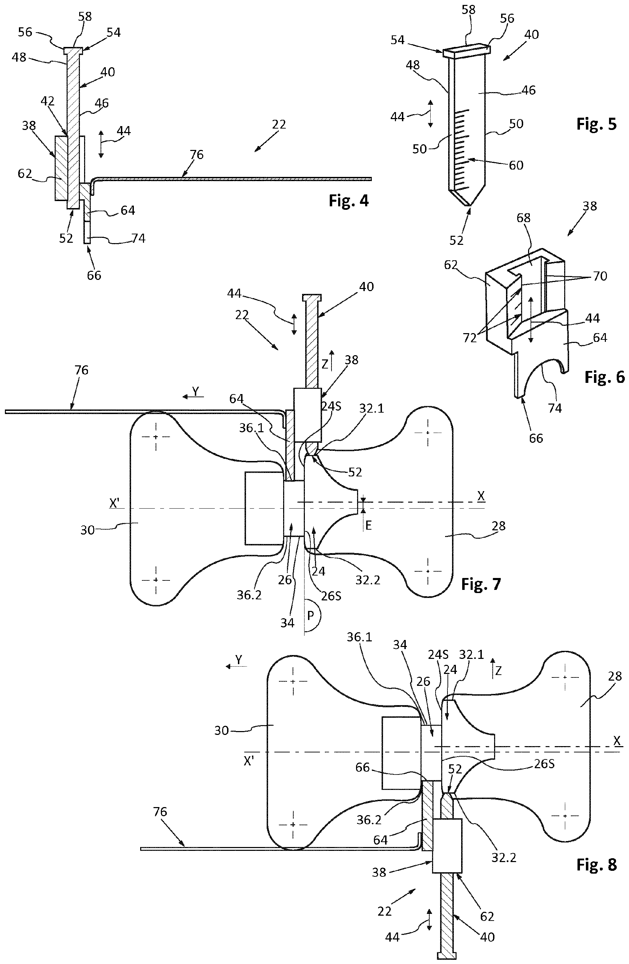

Selon un mode de réalisation illustré sur la figure 5, la pige coulissante 40 a une section rectangulaire constante dans un plan perpendiculaire à la direction longitudinale 44. Ainsi, la pige coulissante 40 comprend une première face 46, une seconde face 48 parallèle à la première face 46 et deux chants 50 qui relient les première et seconde faces 46 et 48. La pige coulissante 40 s'étend d'une première extrémité 52 à une seconde extrémité 54.

La première extrémité 52 est configurée pour prendre appui contre l'une des deux butées 24 ou 26. Avantageusement, la première extrémité 52 a une forme pointue pour obtenir un contact ponctuel ou proche d'un contact ponctuel.

De préférence, la seconde extrémité 54 de la pige coulissante 40 comprend une tête 56 pour manipuler (tirer ou pousser) la pige coulissante 40. Selon un mode de réalisation, la tête 56 a une section plus importante que le restant de la pige coulissante 40 pour offrir une surface d'appui 58 configurée pour être manipulée par un doigt d'un opérateur.

Avantageusement, la première face 46 de la pige coulissante 40 comprend des graduations 60.

Selon un mode de réalisation visible sur la figure 6, le corps 38 comprend un guidage 62 configuré pour recevoir la pige coulissante 40 et lui permettre de coulisser selon la direction longitudinale 44 et un prolongement 64 qui comporte une extrémité 66 configurée pour prendre appui contre l'une des deux butées 24 ou 26.

Le guidage 62 et le prolongement 64 sont décalés selon une direction transversale perpendiculaire à la direction longitudinale 44 d'une distance qui correspond approximativement au décalage entre le premier chant 32.1 et le premier bord 36.1 ou le deuxième chant 32.2 et le deuxième bord 36.2. Pour la suite, un plan de mesure est parallèle aux directions longitudinale et transversale.

Selon un mode de réalisation, le guidage 62 comprend une rainure 68 en forme de U et des rebords 70 disposés de chaque côté de la rainure 68 et orientés l'un vers l'autre de sorte à refermer partiellement la rainure 68. La rainure 68 et les rebords 70 délimitent un logement avec une section rectangulaire égale à un jeu de fonctionement près à celle de la pige coulissante 40.

Avantageusement, le jeu de fonctionnement entre le guidage 62 et la pige coulissante 40 permet de conserver la pige coulissante 40 immobile par rapport au guidage 62 si la pige coulissante 40 n'est pas manipulée.

Selon une autre caractéristique, au moins un des rebords 70 comprend au moins une marque 72 qui coopère avec les graduations 60 de la pige coulissante 40. A cet effet, la pige coulissante 40 est introduite dans le guidage 62 de sorte que la première face 46 de la pige coulissante 40 portant les graduations 60 soit orientée vers les rebords 70 pour être visible.

De préférence, l'un des rebords 70 comprend plusieurs marques 72 qui forment avec les graduations 60 un vernier.

Selon un mode de réalisation, le guidage 62 est parallélépipédique. De préférence, le prolongement 64 est positionné décalé selon la direction longitudinale 44 et plaqué contre la face du guidage 62 au niveau de laquelle débouche la rainure 68. L'extrémité 66 du prolongement 64 a une forme configurée pour coopérer avec la forme d'une des butées. L'extrémité 66 du prolongement 64 comprend une encoche 74 en forme d'arc de cercle dont le diamètre est égal au diamètre du pourtour cylindrique 34 de la deuxième butée 26. Cette configuration permet un meilleur positionnement de l'outil 22 par rapport aux butées 24 et 26, notamment en positionnant l'outil 22 de sorte que la génératrice de l'arc de cercle 74 soit en contact avec le pourtour cylindrique de la butée 26.

En complément, l'extrémité 52 de la pige coulissante 40 et le centre de l'arc de cercle de l'encoche 74 sont positionnées dans le plan de mesure.

Selon une autre caractéristique, l'outil 22 comprend une tige de préhension 76 reliée au corps 38. Cette tige de préhension 76 a une longueur suffisante pour permettre un bon maintien de l'outil depuis une zone dégagée, éloignée des butées 24 et 26.

Selon une configuration, la tige de préhension 76 est parallèle à la direction transversale.

De préférence, la tige de préhension 76 est reliée au corps 38 de manière à rendre visibles les graduations 60 depuis l'extrémité de la tige de préhension 76.

Quelle que soit la variante, l'outil 22 comprend un corps 38, une pige coulissante 40, le corps 38 comprenant un guidage 62 configuré pour permettre à la pige coulissante 40 de coulisser selon une direction longitudinale 44 ainsi qu'un système de contrôle configuré pour contrôler que le désaxage est inférieur à une valeur de tolérance. De préférence, le système de contrôle est configuré pour contrôler que le déplacement de la pige coulissante 40 par rapport au corps 38 entre deux mesures diamétralement opposées et positionnées parallèlement à la direction de désaxage est inférieur au double de la valeur de tolérance du désaxage. Selon un mode de réalisation, le corps 38 comprend au moins une première marque et la pige coulissante 40 comprend au moins une deuxième marque. Selon une configuration, les première et deuxième marques sont alignées lorsque le désaxage est nul et sont décalées en présence d'un désaxage.

De préférence, le système de contrôle est configuré pour mesurer le déplacement de la tige coulissante 40 par rapport au corps 38 grâce aux graduations 60 et à la ou aux marque(s) 72 et ainsi mesurer la valeur du désaxage.

Le procédé de contrôle du désaxage des butées 24 et 26 en utilisant l'outil 22 est le suivant :

Dans un premier temps, comme illustré sur la figure 7, une première mesure d'un premier écart entre le premier bord 36.1 et le premier chant 32.1 est réalisée en utilisant l'outil 22.

Pour cela, l'extrémité 66 du prolongement 64 du corps 38 est appliquée contre la deuxième butée 26. L'outil doit être correctement orienté pour que la direction longitudinale 44 soit alignée avec la direction de désaxage Z. Ce positionnement est facilité grâce à l'encoche 74 en forme d'arc de cercle prévue à l'extrémité de l'extrémité 66 du prolongement 64 qui coopère avec le pourtour cylindrique 34 de la deuxième butée 26. En suivant, la pige coulissante 40 est poussée pour que son extrémité 52 soit en contact avec la première butée 24. Grâce aux graduations 60 et à la ou aux marque(s) 72, il est alors possible de lire la première mesure qui correspond à l'écart entre le premier bord 36.1 et le premier chant 32.1. Si nécessaire, l'outil 22 est retiré des butées 24 et 26 en prenant soin de ne pas pousser ou tirer la pige coulissante 40 pour faciliter la lecture de la première mesure.

Dans un second temps, comme illustré sur la figure 8, une seconde mesure d'un second écart entre le deuxième bord 36.2 et le deuxième chant 32.2 est réalisée en plaçant l'outil 22 dans une position diamétralement opposée à celle occupée lors de la première mesure.

Comme précédemment, l'extrémité 66 du prolongement 64 du corps 38 est appliquée contre la deuxième butée 26 en veillant à ce que l'outil soit correctement orienté.

En suivant, la pige coulissante 40 est poussée pour que son extrémité 52 soit en contact avec la première butée 24. Grâce aux graduations 60 et à la ou aux marque(s) 72, il est alors possible de lire la seconde mesure qui correspond à l'écart entre le deuxième bord 36.2 et le deuxième chant 32.1. Si nécessaire, l'outil 22 est retiré des butées 24 et 26 en prenant soin de ne pas pousser ou tirer la pige coulissante 40 pour faciliter la mesure.

Enfin, la valeur du désaxage est déterminée. La valeur du désaxage est égale à la moyenne des première et seconde mesures (ce qui correspond également à la moitié de la différence entre la première mesure et la seconde mesure).

Selon un mode opératoire simplifié, l'outil 22 est positionné dans une première position.

L'extrémité 66 du prolongement 64 du corps 38 est appliquée contre la deuxième butée 26 puis la pige coulissante 40 est poussée pour que son extrémité 52 soit en contact avec la première butée 24. Une marque à cheval sur le guidage 62 et la pige coulissante 40 est réalisée.

En suivant, l'outil 22 est positionné dans une seconde position diamétralement opposée à la première position, les première et seconde positions étant alignées selon la direction de désaxage. L'extrémité 66 du prolongement 64 du corps 38 est appliquée contre la deuxième butée 26 puis la pige coulissante 40 est poussée pour que son extrémité 52 soit en contact avec la première butée 24. Enfin, on contrôle que l'écart entre la première partie de la marque apposée sur le guidage 62 et la seconde partie de la marque apposée sur la pige coulissante 40 est inférieur ou égal au double de la valeur de tolérance. Selon ce mode opératoire simplifié, le désaxage n'est pas mesuré. On contrôle simplement qu'il est inférieur ou égal à la valeur de tolérance.

En variante, l'écart entre la première partie de la marque apposée sur le guidage 62 et la seconde partie de la marque apposée sur la pige coulissante 40 est mesuré pour déterminer la valeur de désaxage. Cette valeur de désaxage est égale à la moitié de l'écart entre les deux parties de la marque.

## Revendications

1. Outil de contrôle d'un désaxage entre deux butées (24, 26), l'outil comprenant un corps (38), une pige coulissante (40) et un système de contrôle d'un déplacement de la pige coulissante (40) par rapport au corps (38), la pige coulissante (40) comprenant une extrémité (52) configurée pour prendre appui contre une première butée (24) parmi les deux butées (24, 26), le corps (38) comprenant un guidage (62) configuré pour permettre à la pige coulissante (40) de coulisser selon une direction longitudinale (44) et un prolongement (64) qui comporte une extrémité (66) configurée pour prendre appui contre une deuxième butée (26) parmi les deux butées (24, 26), le guidage (62) et le prolongement (64) étant décalés l'un de l'autre selon une direction transversale perpendiculaire à la direction longitudinale (44), **caractérisé en ce que** l'extrémité (66) du prolongement (64) comprend une encoche (74) en forme d'arc de cercle avec un diamètre égal au diamètre de la deuxième butée (26) en forme de pastille cylindrique.

2. Outil selon la revendication 1, **caractérisé en ce que** l'extrémité (52) de la pige coulissante (40) a une forme pointue.

3. Outil selon l'une des revendications précédentes, **caractérisé en ce que** le système de contrôle est configuré pour mesurer le déplacement de la pige coulissante (40) par rapport au corps (38).

4. Outil selon la revendication 3, **caractérisé en ce que** le système de contrôle comprend des graduations (60) sur la pige coulissante (40) et au moins une marque (72) sur le corps (38) configurée pour coopérer avec les graduations (60) de la pige coulissante (40).

5. Outil selon l'une des revendications précédentes, **caractérisé en ce que** l'outil (22) comprend une tige de préhension reliée au corps (38).

6. Procédé de contrôle d'un désaxage, mis en oeuvre par un outil de contrôle selon l'une quelconque des revendications 1 à 5, entre une première butée (24) et une deuxième butée (26), la première butée (24) comprenant une première surface de contact (24S) délimitée selon une direction de désaxage (Z) par un premier chant (32.1) et par un deuxième chant (32.2), la deuxième butée (26) comprenant une deuxième surface de contact (26S) délimitée selon la direction de désaxage (Z) par un premier bord (26.1) et par un deuxième bord (26.2), le procédé comprenant une étape de détermination d'un écart entre une première distance selon la direction de désaxage, dans une première position, entre le premier chant (32.1) de la première butée (24) et le premier bord (36.1) de la deuxième butée (26) et une seconde distance selon la direction de désaxage, dans une seconde position diamétralement opposée à la première position, entre le deuxième chant (32.2) de la première butée (24) et le deuxième bord (36.2) de la deuxième butée (26) et une étape de contrôle que l'écart est inférieur ou égal au double d'une valeur de tolérance.

7. Procédé de mesure d'un désaxage, mis en oeuvre par un outil de contrôle selon l'une quelconque des revendications 1 à 5, entre une première butée (24) et une deuxième butée (26), la première butée (24) comprenant une première surface de contact (24S) délimitée selon une direction de désaxage (Z) par un premier chant (32.1) et par un deuxième chant (32.2), la deuxième butée (26) comprenant une deuxième surface de contact (26S) délimitée selon la direction de désaxage (Z) par un premier bord (26.1) et par un deuxième bord (26.2), le procédé comprenant une étape de réalisation d'une première mesure selon la direction de désaxage, dans une première position, entre le premier chant (32.1) de la première butée (24) et le premier bord (36.1) de la deuxième butée (26), une étape de réalisation d'une seconde mesure selon la direction de désaxage, dans une seconde position diamétralement opposée à la première position, entre le deuxième chant (32.2) de la première butée (24) et le deuxième bord (36.2) de la deuxième butée (26), une étape de détermination d'une valeur de désaxage qui est égale à la moitié de la différence entre la première mesure et la seconde mesure.

## Patentansprüche

1. Werkzeug zur Kontrolle eines Achsversatzes zwischen zwei Anschlägen (24, 26), wobei das Werkzeug einen Körper (38), eine gleitende Messlatte (40) und ein Kontrollsystem einer Verschiebung der gleitenden Messlatte (40) bezüglich des Körpers (38) enthält, wobei die gleitende Messlatte (40) ein Ende (52) enthält, das konfiguriert ist, sich gegen einen ersten Anschlag (24) der zwei Anschläge (24, 26) anzulegen, wobei der Körper (38) eine Führung (62), die konfiguriert ist, der gleitenden Messlatte (40) zu erlauben, gemäß einer Längsrichtung (44) zu gleiten, und eine Verlängerung (64) enthält, die ein Ende (66) aufweist, das konfiguriert ist, sich gegen einen zweiten Anschlag (26) der zwei Anschläge (24, 26) anzulegen, wobei die Führung (62) und die Verlängerung (64) gemäß einer Querrichtung lotrecht zur Längsrichtung (44) zueinander versetzt sind, **dadurch gekennzeichnet, dass** das Ende (66) der Verlängerung (64) eine Kerbe (74) in Form eines Kreisbogens mit einem Durchmesser gleich dem Durchmesser des zweiten Anschlags (26) in Form einer zylindrischen Scheibe enthält.

2. Werkzeug nach Anspruch 1, **dadurch gekennzeichnet, dass** das Ende (52) der gleitenden Messlatte (40) eine spitze Form hat.

3. Werkzeug nach einem der vorhergehenden Ansprüche, **dadurch gekennzeichnet, dass** das Kontrollsystem konfiguriert ist, die Verschiebung der gleitenden Messlatte (40) bezüglich des Körpers (38) zu messen.

4. Werkzeug nach Anspruch 3, **dadurch gekennzeichnet, dass** das Kontrollsystem Gradeinteilungen (60) auf der gleitenden Messlatte (40) und mindestens eine Markierung (72) auf dem Körper (38) enthält, die konfiguriert ist, mit den Gradeinteilungen (60) der gleitenden Messlatte (40) zusammenzuwirken.

5. Werkzeug nach einem der vorhergehenden Ansprüche, **dadurch gekennzeichnet, dass** das Werkzeug (22) eine mit dem Körper (38) verbundene Greifstange enthält.

6. Verfahren zur Kontrolle eines Achsversatzes, angewendet von einem Kontrollwerkzeug nach einem der Ansprüche 1 bis 5, zwischen einem ersten Anschlag (24) und einem zweiten Anschlag (26), wobei der erste Anschlag (24) eine erste Kontaktfläche (24S) enthält, die gemäß einer Achsversatzrichtung (Z) von einer ersten Kante (32.1) und von einer zweiten Kante (32.2) begrenzt wird, wobei der zweite Anschlag (26) eine zweite Kontaktfläche (26S) enthält, die gemäß der Achsversatzrichtung (Z) von einem ersten Rand (26.1) und von einem zweiten Rand (26.2) begrenzt wird, wobei das Verfahren einen Schritt der Bestimmung einer Abweichung zwischen einem ersten Abstand gemäß der Achsversatzrichtung, in einer ersten Stellung, zwischen der ersten Kante (32.1) des ersten Anschlags (24) und dem ersten Rand (36.1) des zweiten Anschlags (26) und einem zweiten Abstand gemäß der Achsversatzrichtung, in einer zweiten Stellung, die der ersten Stellung diametral entgegengesetzt liegt, zwischen der zweiten Kante (32.2) des ersten Anschlags (24) und dem zweiten Rand (36.2) des zweiten Anschlags (26) und einen Schritt der Kontrolle enthält, ob die Abweichung geringer als oder gleich dem Doppelten eines Toleranzwerts ist.

7. Verfahren zur Messung eines Achsversatzes, das von einem Kontrollwerkzeug nach einem der Ansprüche 1 bis 5 verwendet wird, zwischen einem ersten Anschlag (24) und einem zweiten Anschlag (26), wobei der erste Anschlag (24) eine erste Kontaktfläche (24S) enthält, die gemäß einer Achsversatzrichtung (Z) von einer ersten Kante (32.1) und von einer zweiten Kante (32.2) begrenzt wird, wobei der zweite Anschlag (26) eine zweite Kontaktfläche (26S) enthält, die gemäß der Achsversatzrichtung (Z) von einem ersten Rand (26.1) und von einem zweiten Rand (26.2) begrenzt wird, wobei das Verfahren einen Schritt der Durchführung einer ersten Messung gemäß der Achsversatzrichtung in einer ersten Stellung zwischen der ersten Kante (32.1) des Anschlags (24) und dem ersten Rand (36.1) des zweiten Anschlags (26), einen Schritt der Durchführung einer zweiten Messung gemäß der Achsversatzrichtung in einer der ersten Stellung diametral entgegengesetzten zweiten Stellung zwischen der zweiten Kante (32.2) des Anschlags (24) und dem zweiten Rand (36.2) des zweiten Anschlags (26), einen Schritt der Bestimmung eines Achsversatzwerts enthält, der gleich der Hälfte der Differenz zwischen der ersten Messung und der zweiten Messung ist.

## Claims

1. Tool for controlling an offset between two stops (24, 26), the tool comprising a body (38), a sliding rule (40) and a system for controlling a displacement of the sliding rule (40) in relation to the body (38), the sliding rule (40) comprising an end (52) configured to abut against a first stop (24) of the two stops (24, 26), the body (38) comprising a guide (62) configured to allow the sliding rule (40) to slide in a longitudinal direction (44) and an extension (64) that includes an end (66) configured to abut against a second stop (26) of the two stops (24, 26), the guide (62) and the extension (64) being offset in relation to one another in a transversal direction perpendicular to the longitudinal direction (44), **characterized in that** the end (66) of the extension (64) comprises a notch (74) in the shape of a circular arc with a diameter equal to the diameter of the second stop (26) in the shape of a cylindrical pellet.

2. Tool according to Claim 1, **characterized in that** the end (52) of the sliding rule (40) has a pointed shape.

3. Tool according to either of the previous claims, **characterized in that** the control system is configured to measure the displacement of the sliding rule (40) in relation to the body (38).

4. Tool according to Claim 3, **characterized in that** the control system comprises graduations (60) on the sliding rule (40) and at least one mark (72) on the body (38) configured to cooperate with the graduations (60) of the sliding rule (40).

5. Tool according to one of the previous claims, **characterized in that** the tool (22) comprises a handle connected to the body (38).

6. Method for controlling an offset, implemented by a control tool according to any one of Claims 1 to 5, between a first stop (24) and a second stop (26), the first stop (24) comprising a first contact surface (24S) delimited in a direction of offset (Z) by a first edge (32.1) and by a second edge (32.2), the second stop (26) comprising a second contact surface (26S) delimited in the direction of offset (Z) by a first edge (26.1) and by a second edge (26.2), the process comprising a step to determine a deviation between a first distance in the direction of offset, in a first position, between the first edge (32.1) of the first stop (24) and the first edge (36.1) of the second stop (26) and a second distance in the direction of offset, in a second position diametrically opposite to the first position, between the second edge (32.2) of the first stop (24) and the second edge (36.2) of the second stop (26) and a step of controlling that the deviation is less than or equal to twice a tolerance value.

7. Method for measuring an offset on previous page between a first stop (24) and a second stop (26), the first stop (24) comprising a first contact surface (24S) delimited in a direction of offset (Z) by a first edge (32.1) and by a second edge (32.2), the second stop (26) comprising a second contact surface (26S) delimited in the direction of offset (Z) by a first edge (26.1) and by a second edge (26.2), the process comprising a step to perform a first measurement in the direction of offset, in a first position, between the first edge (32.1) of the first stop (24) and the first edge (36.1) of the second stop (26), a step to perform a second measurement in the direction of offset, in a second position diametrically opposite to the first position, between the second edge (32.2) of the first stop (24) and the second edge (36.2) of the second stop (26), and a step to determine a value of offset that is equal to half the difference between the first measurement and the second measurement.
